# EUROPEAN PATENT SPECIFICATION

(11) **EP 2 632 560 B1**
(45) Date of publication and mention of the grant of the patent: **14.10.2020**
(21) Application number: 11837143.4
(22) Date of filing: 28.10.2011
(51) Int. Cl.: B01D 15/22, G01N 30/88, G01N 30/60, G01N 30/46, G01N 30/38, G01N 30/08, G01N 30/30, G01N 35/00

(54) **MODULAR MULTIPLE-COLUMN CHROMATOGRAPHY CARTRIDGE**
MODULARE CHROMATOGRAPHIEKARTUSCHE MIT MEHREREN SÄULEN
CARTOUCHES MODULAIRES POUR CHROMATOGRAPHIE SUR COLONNES MULTIPLES

(30) Priority: 29.10.2010 US 408044 P
(43) Date of publication of application: 04.09.2013
(73) Proprietor: Thermo Finnigan LLC, San Jose, CA 95134 (US)
(72) Inventor: BRANN, John, E., Shrewsbury MA 01545 (US)
(74) Representative: Boult Wade Tennant LLP
(86) International application number: PCT/US2011/058229
(87) International publication number: WO 2012/058515

(56) References cited:
- WO-A1-2009/147001
- US-A- 4 364 263
- US-A- 4 604 198
- US-A- 5 772 874
- US-A- 5 983 710
- US-A1- 2002 199 094
- US-A1- 2006 027 490
- US-A1- 2007 189 944
- US-A1- 2008 235 081
- US-A1- 2009 324 447
- US-A1- 2010 044 288
- US-A1- 2010 071 444
- US-A1- 2010 101 411
- US-A1- 2010 148 055
- US-B1- 6 427 731
- US-B1- 7 261 812
- US-B2- 7 501 284
- MITCHELL R J ET AL: "The application of fully automated on-line solid phase extraction in bioanalysis", JOURNAL OF PHARMACEUTICAL AND BIOMEDICAL ANALYSIS, NEW YORK, NY, US, vol. 52, no. 1, 13 November 2009 (2009-11-13), - 1 May 2010 (2010-05-01), pages 86-92, XP026863820, ISSN: 0731-7085 [retrieved on 2009-11-13]
- CHASSAING C ET AL: "A Parallel Micro Turbulent Flow Chromatography-Tandem Mass Spectrometry Method for the Analysis of a Pharmaceutical Compound in Plasma", CHROMATOGRAPHIA; AN INTERNATIONAL JOURNAL FOR RAPID COMMUNICATION IN CHROMATOGRAPHY, ELECTROPHORESIS AND ASSOCIATED TECHNIQUES, VIEWEG VERLAG, WI, vol. 62, no. 1-2, 15 June 2005 (2005-06-15), - July 2005 (2005-07), pages 17-24, XP019358441, ISSN: 1612-1112
- TURNPENNY ET AL: "Development of a mu-turbulent flow chromatography focus mode method for drug quantitation in discovery bioanalysis", JOURNAL OF CHROMATOGRAPHY B: BIOMEDICAL SCIENCES & APPLICATIONS, ELSEVIER, AMSTERDAM, NL, vol. 856, no. 1-2, 27 August 2007 (2007-08-27), pages 131-140, XP022215597, ISSN: 1570-0232, DOI: 10.1016/J.JCHROMB.2007.05.032
- STOLL ET AL: "Fast, comprehensive two-dimensional liquid chromatography", JOURNAL OF CHROMATOGRAPHY A, ELSEVIER, AMSTERDAM, NL, vol. 1168, no. 1-2, 2 October 2007 (2007-10-02), pages 3-43, XP022282429, ISSN: 0021-9673, DOI: 10.1016/J.CHROMA.2007.08.054
- APFFEL J A ET AL: "Automated on-line multi-dimensional high-performance liquid chromatographic techniques for the clean-up and analysis of water-soluble samples", JOURNAL OF CHROMATOGRAPHY A, ELSEVIER, AMSTERDAM, NL, vol. 206, no. 1, 6 February 1981 (1981-02-06), pages 43-57, XP026550089, ISSN: 0021-9673, DOI: 10.1016/S0021-9673(00)82604-7 [retrieved on 1981-02-06]

## Description

### TECHNICAL FIELD

This invention generally relates to chromatography, and more particularly to a cartridge module for simultaneously fluidically coupling at least two chromatography columns to fluid-carrying tubing within a liquid chromatography system.

### BACKGROUND ART

Liquid chromatography (LC) is well-known in the fields of chemical separation, compound purification and chemical analysis. A central component of a liquid chromatography system is a chromatographic column. The column comprises a capillary tube that is packed with a permeable solid material that either is, itself, a chromatographic stationary phase or otherwise comprises or supports a chromatographic stationary phase. A fluid mixture comprising both a compound of interest for purification or separation as well as a chromatographic mobile phase is caused to flow through the column under pressure from an input end to an output end. Generally, the chemical properties of the stationary phase and the mobile phase are such that the degree of partitioning of the compound of interest between the mobile phase and the stationary phase is different from the degree of partitioning of other compounds within the fluid. As a result, the degree of retention or time of retention of the compound of interest within the column is different from the degree or time of retention of the other compounds, thus causing a physical separation or partial purification of the compound of interest from the other compounds.

As used herein, "liquid chromatography" (LC) means a process of selective retention of one or more components of a fluid solution as the fluid uniformly percolates through a column of a finely divided substance, or through capillary passageways. The retention results from the distribution of the components of the mixture between one or more stationary phases and the bulk fluid, (i.e., mobile phase), as this fluid moves relative to the stationary phase(s). "Liquid chromatography" includes, without limitation, reverse phase liquid chromatography (RPLC), high performance liquid chromatography (HPLC), ultra high performance liquid chromatography (UHPLC), supercritical fluid chromatography (SFC) and ion chromatography.

As used herein, the term "HPLC" or "high performance liquid chromatography" refers to liquid chromatography in which the degree of separation is increased by forcing the mobile phase under pressure through a stationary phase, typically a densely packed column.

As used herein, the term "UHPLC" or "ultra high performance liquid chromatography" refers to a liquid chromatography technique similar to HPLC except the operating pressures are higher than HPLC (e.g., about 100 MPa vs. about 40 MPa), the columns are typically smaller in diameter, and resolution can be greater.

Chromatography may be used to purify or enrich one or more analytes of a sample, prior to analysis by mass spectrometry. The chromatography step or steps are generally used to enrich one or more analytes of interest relative to one or more other components of the sample. Typically, one or more methods including, without limitation, liquid chromatography, HPLC, UHPLC, precipitation, dialysis, affinity capture, electrophoresis, or other suitable methods known in the art, are used for the purification.

Various methods have been described involving the use of HPLC for sample cleanup prior to mass spectrometry analysis. For example, see, e.g., Taylor et al., Therapeutic Drug Monitoring 22:608-12 (2000) (manual precipitation of blood samples, followed by manual C18 solid phase extraction, injection into an HPLC for chromatography on a C18 analytical column, and MS/MS analysis); and Salm et al., Clin. Therapeutics 22 Supl. B:B71-B85 (2000) (manual precipitation of blood samples, followed by manual C18 solid phase extraction, injection into an HPLC for chromatography on a C18 analytical column, and MS/MS analysis). One of skill in the art can select HPLC instruments and columns that are suitable for use in the invention. The chromatographic column typically includes a medium (i.e., a packing material) to facilitate separation of chemical moieties (i.e., fractionation). The medium may include minute particles. The particles may include a bonded surface that interacts with the various chemical moieties to facilitate separation of the chemical moieties. One suitable bonded surface is a hydrophobic bonded surface such as an alkyl bonded surface. Alkyl bonded surfaces may include C-4, C-8, or C-18 bonded alkyl groups, preferably C-18 bonded groups. The chromatographic column includes an inlet port for receiving a sample and an outlet port for discharging an effluent that includes the fractionated sample. For example, a test sample may be applied to the column at the inlet port, eluted with a solvent or solvent mixture, and discharged at the outlet port.

In another example, more than one column may be used wherein a test sample may be applied to a first column (e.g., a cleanup column) at the inlet port, eluted with a solvent or solvent mixture onto a second column (e.g., an analytical column), and eluted with a solvent or solvent mixture from the second column to the outlet port. Different solvent modes may be selected for eluting the analytes. For example, liquid chromatography may be performed using a gradient mode, an isocratic mode, or a polytyptic (i.e. mixed) mode.

Complex samples, such as biologically-derived fluids, may contain a large number of compounds. Generally, a laboratory analysis will be directed to detect the presence (vs. absence) or the concentrations of a limited number of target compounds within the complex sample. Frequently, a chromatographic signature (or signatures) of the target compound (or compounds) will be masked by the elution properties of much-more-abundant matrix compounds. Therefore, it is often desirable to perform two-stage or multiple-stage chromatographic separations in order to increase analyte signal strength or to improve the ability to discriminate the analyte signal from background noise or other interferences. A first such step - i.e., a "cleanup" step - may be employed to separate certain classes or sub-sets of compounds from one another (e.g. large molecule versus small molecule, or polar versus non polar) with the fraction that may contain possible analyte substances retained and the other fraction discarded. Then, in a second chromatographic separation step - i.e., an "analytical" step - the retained fraction may be separated into particular isolated compounds. Such two-stage or multiple-stage separations may require multiple chromatographic columns, each such column uniquely optimized to perform a particular type of separation.

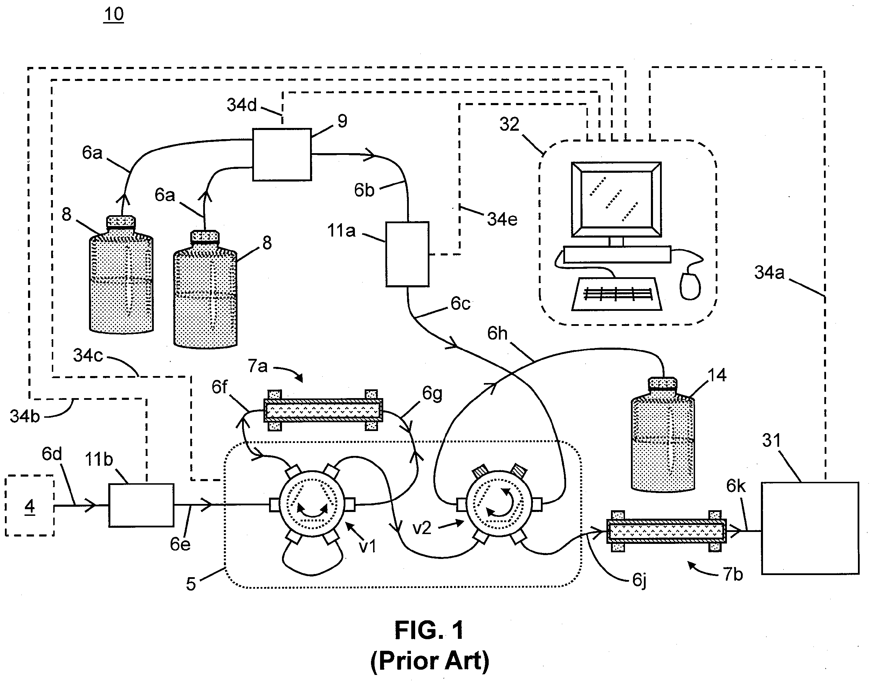

FIG. 1 is a schematic illustration of an example of a conventional liquid chromatography system having two chromatography columns. The system **10** shown in FIG. 1 comprises a first chromatography column **7a** (a "cleanup" column) for conducting an initial separation of a liquid chemical mixture so as to isolate a sub-group of its constituent substances as well as a second chromatography column **7b** (an "analytical" column) for performing a more finely resolved or finely detailed separation of the constituents of the isolated sub-group. The system also comprises a detector **31** fluidically coupled to the second column **7b** for detecting or identifying the separated constituent substances as they are received, in sequence from the second column **7b**. Frequently, the detector **31** comprises a mass spectrometer but may also be any other suitable form of chemical detector, such as an infrared or fluorescence spectrograph.

In operation of the system **10** (FIG. 1), the first column **7a** receives a fluid stream comprising one or more selected solvent fluids supplied from solvent containers **8** and also receives a fluid, from sample source **4,** comprising one or more samples of interest and possibly also a solvent. The various different solvent fluids may comprise a chromatographic mobile phase. The solvent fluids from containers **8** are delivered along fluid tubing lines **6a** to valve or mixing apparatus **9** which may mix the fluids or may select a particular fluid. The solvent fluids are drawn into the system **10** and propelled to downstream components thereof by means of a first pump **11a** (e.g., an eluting pump) that is fluidically coupled to the output of the valve **9** by fluid tubing line **6b**. The solvent fluids output from the pump along fluid tubing line **6c** are delivered to an input of a valve system **5.** In similar fashion, the sample fluid or fluids from sample source **4,** together with any admixed solvents, are delivered into the system **10** through fluid tubing line **6d** under the action of a second pump **11b** (e.g., a loading pump). The sample fluid or fluids together with any admixed solvents, enter another input of the valve system **5** by means of fluid tubing line **6e.** The sample source **4** may, itself, comprise several components. These components, which are not specifically illustrated to avoid unnecessary drawing complexity, may include one or more sample containers, one or more solvent containers, a valve or mixing apparatus, a sample injector, as well as various sections of tubing.

The valve system 5 may comprise a plurality of multiple-port valves fluidically interconnected to one another, to the two pumps and to the two columns by means of various connection tubing lines. For instance, the illustrated valve system **5** comprises two multiple-port rotary valves **v1, v2** such as the valves known as Rheodyne valves sold by IDEX Health & Science, 619 Oak Street Oak Harbor, WA USA. The valve system **5** shown in FIG. 1 is capable of transferring a portion of sample fluid to the first column **7a** along fluid tubing line **6f,** isolating and concentrating a sub-group of sample constituent substances on the first column **7a** while other unwanted constituents are transferred to waste **14** along fluid tubing lines **6g** and **6h,** mixing the isolated and concentrated constituents with solvent fluids or a mobile phase in valve **v2,** transferring the isolated and concentrated sub-group of constituent substances to the second column **7b** along fluid tubing line **6j** and causing the sub-group of constituent substance to flow through the second column **7b** so as to be further separated therein. The separated chemical constituents eluting from the second column **7b** are transferred to the detector **31** along fluid tubing line **6k.** The fluid tubing lines **6f** and **6g** are both shown with bi-directional arrows because, under some circumstances, sample fractions previously concentrated in the first cleanup column **7a** may be released from the column and transferred back to the valve system **5** by back-flushing the column with solvent in the reverse flow direction from that used to load the column.

The system **10** may further comprise an electronic controller or computer apparatus **32** under software or firmware control that is electronically connected to various other system components by electronic communication lines, schematically shown as dashed lines in FIG. 1. For instance, electronic communication line **34a** may be used to send operating control instructions to the detector **31** as well as to receive data from the detector. Electronic communication lines **34b** and **34e** may be used to send operating control instructions to the second pump **11b** and first pump **11a**, respectively. Similarly, electronic communication lines **34c** and **34d** may be used to send operating control instructions to the pair of valves **v1, v2** and to the valve **9** (if present), respectively.

Although a conventional multiple column system, as described above, is capable of obtaining excellent analytical results, it does present a number of actual or potential issues and difficulties about which an analyst must be wary. A first potential difficulty arises from the experimental observations that the cleanup and analytical chromatography columns often need to be matched for optimal analytical results of a particular analyte from a particular type of sample. Various stationary phase materials are available for packing into each of the cleanup and analytical columns. It is often found that best results are obtained, for a given analyte and sample, with a particular combination of cleanup column and analytical column stationary phases (and mobile phases). The most-suitable matching column pair can conceivably vary from one analysis protocol to another. Thus, an analyst must take care to ensure that both the cleanup and analytical columns are appropriate for the analysis at hand and must take care to ensure that both columns are appropriately matched (and possibly replaced) when a new analysis protocol is started. A second potential issue arises from the fact that, since the multiple columns of a conventional multi-column system are not physically integrated with one another, time must be expended to separately replace both columns when a new protocol is started that requires a completely new pair of columns.

A third potential concern arises from the fact that the conventional columns do not carry on-board information on their usage history. This concern arises because chromatography columns have finite useful lifetimes. Thus, existing columns on the conventional system must be occasionally removed and replaced with fresh columns. The analyst must therefore take care to record hours used or the total number of analyses performed for each column. Although such usage history records could be maintained by an electronic controller or computer apparatus, there is a risk of such information being lost if a column is transferred from one chromatography system to another. All of the above issues provide opportunities for errors to be introduced into the analyses with possible consequent invalidation of results.

Apffel et al, J. Chromatogr. 206 (1981) describes a two-stage liquid chromatography system with a size exclusion clean-up column and an analytical column.

US Patent No. 6,427,731 describes a cassette chemical immobilization and treatment system. The cassette comprises a plurality of analyte sample columns on which the chemical treatment protocol is performed. The protocol to be performed is specified on a machine readable instruction code, which is read by chemical treatment system.

US Publication No. US 2002/0199094 describes a fluid separation conduit cartridge which comprises a housing unit, a memory unit and one or more connectors. The memory unit can encrypt, compress, transmit, receive and decrypt information sent to the cartridge from the operating facility or instrument.

### DISCLOSURE OF INVENTION

To address the above-noted issues, the present disclosure provides a cartridge for liquid chromatography separations in accordance with claim 1. The chromatography cartridge comprises a housing having at least two chromatography columns at least partially contained therein. The columns are preferably but not necessarily affixed to the housing. Two columns in each cartridge are matched for purposes of conducting chromatographic separations of a specific analyte (or analytes). The first column comprises a cleanup column while a second column is an analytical column. Connection fittings protruding outside of the housing at each end of each column enable fluidic connection to a chromatograph plumbing system and/or a detector such as a mass spectrometer. The cartridge may optionally comprise heaters and temperature sensors for temperature control of one or more columns as well as optional sensors to monitor fluid flow rate, pH, etc., together with associated electronic connectors. A passive identification feature (an indicator or identifier), e.g., a barcode or RFID module may be employed to identify the cartridge and its associated chromatography methods to external apparatus/software. Further, an on-board memory module and controller chip may be used to actively record computer-readable module information, including module history information, the information transferrable through a standard interface, such as a universal serial bus (USB) port.

The connection fittings of the cartridge may provide quick connect/disconnect functionality at each end of each column housed therein, so that modules directed to analyses of different respective analytes may be rapidly interchanged. Each column connection fitting may mate with an inventive device that guides a fluid-carrying tube into the respective column end fitting such that the tube will be in contact with the column end fitting; applies a spring force to the tube which exceeds the opposing force that will be created when the column is at maximum operating pressure; and ensures that a deformable sealing member (which may be a ferrule) comes in contact with the same column end fitting, encircling the tube. Separate spring forces are applied to the tube and to the sealing member. The latter spring force ensures that a proper fluid seal is made between the tube, sealing member and column end fitting to prevent any leakage at the maximum operating pressure of the column. The positioning of the tube, sealing member, and column end fitting and the spring forces for the tube and sealing member may be provided for by a lever which provides an appropriate amount of motion and mechanical advantage such that an operator does not require a tool to insert or extract a cartridge.

### BRIEF DESCRIPTION OF DRAWINGS

The above noted and various other aspects of the present invention will become apparent from the following description which is given by way of example only and with reference to the accompanying drawings, not drawn to scale, in which:
FIG. 1 is a schematic illustration of a generalized conventional multiple-column liquid chromatography (LC) system;
FIG. 2 is a schematic illustration of a multiple-column LC system in accordance with the present teachings;
FIG. 3A is a schematic illustration of a two-column chromatography cartridge according to various aspects of the present teachings;
FIG. 3B is a schematic illustration of another two-column chromatography cartridge according to various aspects of the present teachings;
FIG. 3C is an overhead perspective view of still another two-column chromatography cartridge according to various aspects of the present teachings;
FIG. 3D is an underneath perspective view of the two-column chromatography cartridge of FIG. 3C;
FIG. 4A is an illustration of an apparatus for coupling a tubing to an end of a chromatographic column in accordance with various aspects of the present teachings;
FIG. 4B is a perspective view of the column securing mechanism portion of FIG. 4A;
FIG. 5A is an illustration of a portion of a second apparatus for coupling a tubing to an end of a chromatographic column in accordance with various aspects of the present teachings;
FIG 5B is an illustration of a portion of a third apparatus for coupling a tubing to an end of a chromatographic column in accordance with various aspects of the present teachings;
FIG. 6A is a first perspective view of a fourth apparatus for coupling a tubing to an end of a chromatographic column in accordance with various aspects of the present teachings;
FIG. 6B is a second perspective view of the apparatus illustrated in FIG. 6A;
FIG. 6C is a cross sectional view taken through the center of and along the main axis of the apparatus illustrated in FIGS. 6A, 6B;
FIG. 7 is an illustration of a first system for coupling an input tubing and an output tubing to respective ends of a each one of two chromatographic columns of a two-column cartridge in accordance with various aspects of the present teachings; and
FIG. 8 is an illustration of another system for coupling an input tubing and an output tubing to respective ends of a each one of two chromatographic columns of a two-column cartridge in accordance with various aspects of the present teachings.

### MODES FOR CARRYING OUT THE INVENTION

The following description is presented to enable any person skilled in the art to make and use the invention, and is provided in the context of a particular application and its requirements. Various modifications to the described embodiments will be readily apparent to those skilled in the art and the generic principles herein may be applied to other embodiments. Thus, the present invention is not intended to be limited to the embodiments and examples shown but is to be accorded the widest possible scope in accordance with the features and principles shown and described. To appreciate the features of the present invention in greater detail, please refer to FIGS. 1-8 in conjunction with the following discussion.

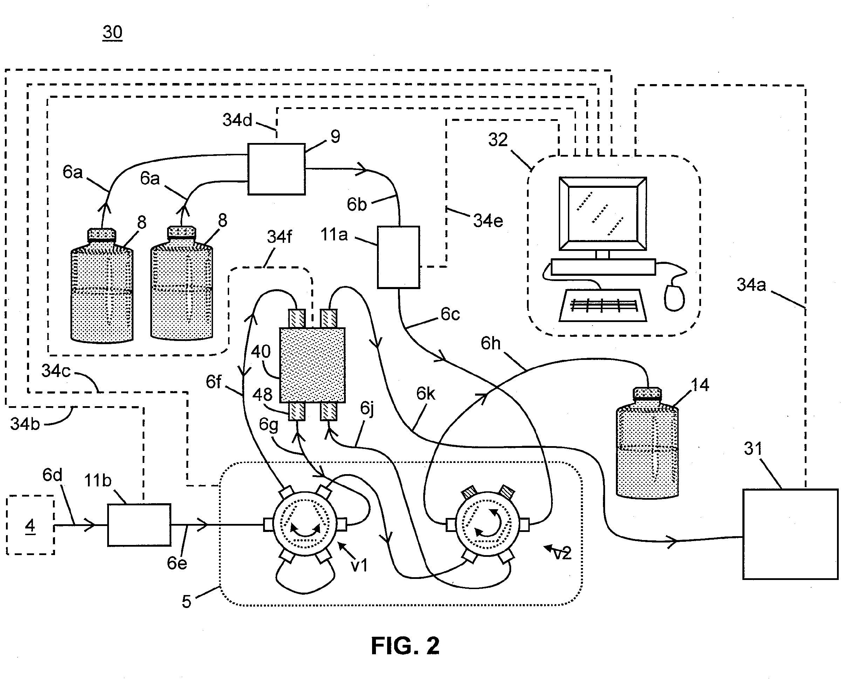

Although the conventional system **10** illustrated in FIG. 1 is capable of obtaining excellent analytical results, it does present a number of actual or potential issues and difficulties as previously noted above. Accordingly, FIG. 2 provides a schematic illustration of an improved system in accordance with various aspects of the present teachings. Like reference numbers in FIGS. 1-2 refer to like components in the system **10** (FIG. 1) and the system **30** (FIG. 2). Comparison of the two figures shows that the two discrete columns **7a, 7b** of the system **10** are replaced by the single integrated cartridge **40** of the system **30.** The cartridge **40** of the system **30** contains therein both a first column analogous to the cleanup column **7a** of FIG. 1 as well as a second column analogous to the analytical column **7b** of FIG. 1.

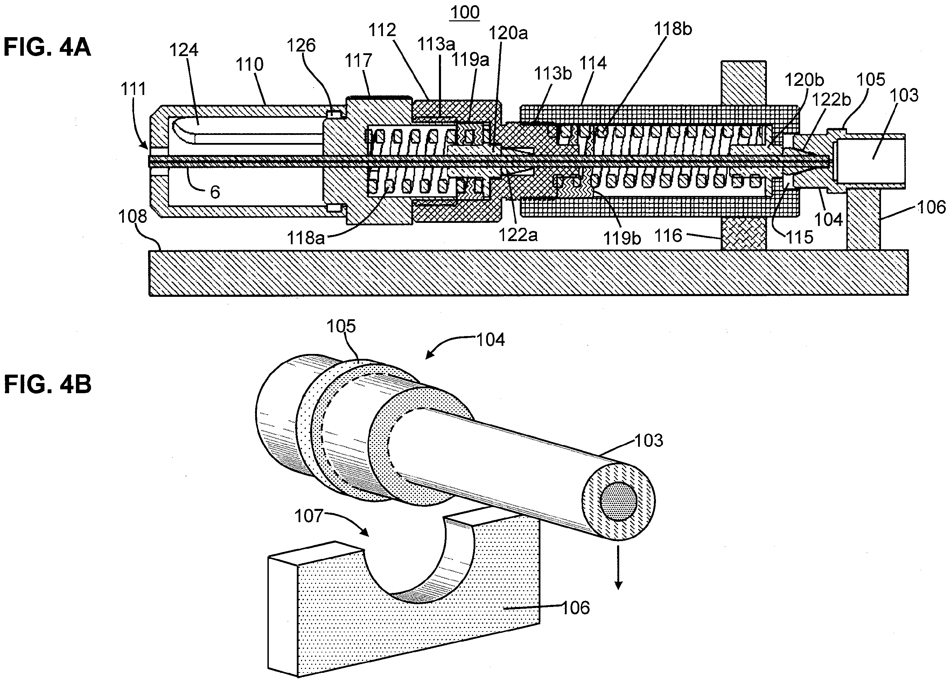

Connectors **48** are employed in order to connect the two end fittings of the first column of the cartridge **40** to fluid tubing lines **6f** and **6g** as well as to connect the two end fittings of the second column of the cartridge **40** to fluid tubing lines **6k** and **6j.** Each connector **48** may comprise a simple conventional tubing connection fitting or end fitting consisting of just a coupling nut, a tubular coupling body and a ferrule. However, in accordance with various aspects of the present teachings, the connectors **48** may comprise alternative apparatuses designed so as to not require an installation tool and so as to prevent application of a twisting motion or torque. Examples of such apparatuses are illustrated in the appended FIGS. 4-6 and discussed in greater detail following. The columns within any individual cartridge are matched with one another so as to provide optimum chromatographic separation for a particular type of analysis, a particular analysis protocol, or a particular type of sample. Optimal separation or concentration of any particular analyte may require a particular combination of cleanup and analytical column properties (e.g., chemical or physical makeup of the stationary phase). The utilization of two columns within a single cartridge thus enables two columns of a matched set (within a first cartridge) to be rapidly swapped out and replaced with a matched pair of columns (within a second cartridge) that are better suited to a subsequently run analysis or analysis protocol.

The provision of the cartridge **40** in the system **30** (FIG. 2) enables not only quick interchange of matched sets of columns but also the inclusion of on-board cartridge electronics or electronically controlled components that relate to cartridge operation or that store or manipulate data relating to the cartridge. For instance, the cartridge may comprise components that relate to controlling a column environmental variable, such as temperature, during the course of a chromatographic separation for purposes of controlling the separation. In addition or alternatively, the cartridge may comprise one or more sensors or transducers that monitor an environmental or operational parameter that relates to the functioning of one or more columns of the module, such as temperature, fluid pressure or fluid flow rate. In addition or alternatively, the cartridge may comprise an electronic memory storage device that may store data relating to the cartridge identity; the types of columns housed within the cartridge; the nature of any analytical protocols for which the cartridge is designed; and possible historical cartridge usage data such as number of hours operated, number of analyses performed or time profiles of temperature, pressure or flowrate recorded by any on-board sensors.

In accordance with the above considerations, the module may comprise, in addition to the fluid connections, an electronic connector or other electrical connector that enables communication between the cartridge **40** and the controller or computer apparatus **32** by means of an electronic communication line **34f** (FIG. 2). The electronic communication line **34f** may provide two-way communication. For instance, software of the controller or computer apparatus **32** may read cartridge identification information from the cartridge so as to verify that the correct cartridge is in use for the current analysis protocol and to check that an attempt is not being made to use the cartridge beyond its nominal useful lifetime. Alternatively, or in addition, the controller or computer apparatus **32** may send control signals to the cartridge **40** so as to operate one or more operational control devices of the cartridge, such as a column heater.

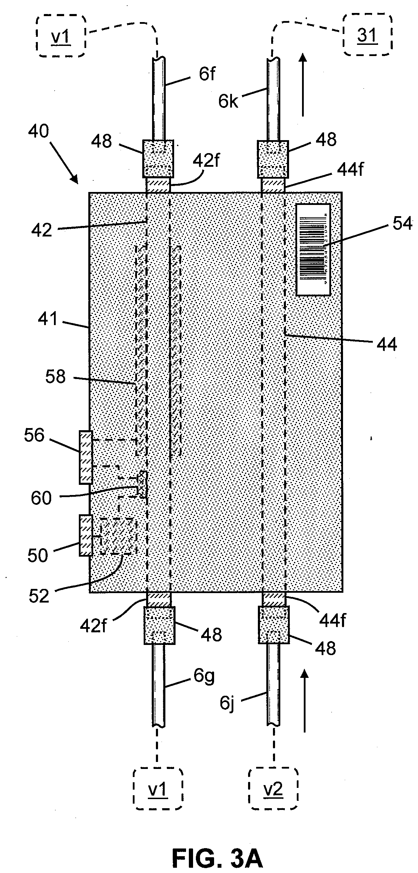

FIG. 3A is a schematic illustration showing additional details of a dual-column chromatography cartridge in accordance with the present teachings. The chromatography cartridge **40** comprises a housing **41** having two chromatography columns - a first column **42** and a second column **44** - at least partially contained therein. Preferably, but not necessarily, the columns **42, 44** are affixed to the housing **41.** The two columns in each cartridge are matched for purposes of conducting chromatographic separations of a specific analyte (or analytes). The first column **42** comprises a cleanup column such as a TurboFlow® or HTLC column while the second column **44** comprises an analytical column. The first column **42** comprises two column end fittings **42f** with one such end fitting at each of the two column ends. Likewise, the second column comprises an end fitting **44f** at each of its two ends. As is known, column end fittings are attachment points for fluidic connections to external tubing. Accordingly, connectors **48** are employed in order to connect the two end fittings of the first column **42** to fluid tubing lines **6f** and **6g** as well as to connect the two end fittings of the second column **44** to fluid tubing lines **6k** and **6j,** these external tubing lines being similar to those shown in FIG. 2. As previously noted, the two tubing lines **6f** and **6g** both connect, at their opposite ends to rotary valve **v1** and may direct flow in either direction through the first column **42,** depending on whether the column is being loaded or flushed. The tubing lines **6j** and **6k** are, respectively, fluid input and output lines with respect to the second column **44** with line **6j** providing fluid to the second column from the rotary valve **v2** and line **6k** outputting eluting analytes to the detector **31.** Note that the fluid tubing lines **6j, 6k** could also be coupled to the column ends of the second column **44** in an opposite sense to that shown in FIG. 3A such that fluid flow through that column would be in the opposite direction to that shown.

The cartridge **40** may include a passive identification feature (an indicator or identifier), e.g., a barcode **54** or an RFID module, etc. that may be employed to identify the cartridge and its associated chromatography methods to external apparatus/software. For instance, the system **30** may include a barcode reader (not shown) or other apparatus capable of interpreting the passive identification feature, the reader or other apparatus being electronically connected to the electronic controller or computer apparatus **32.** This feature may enable system software to be able to automatically verify that the columns within an inserted cartridge are appropriate for an analysis protocol currently being conducted by the system.

The cartridge **40** may further or alternatively include various electronic control, sensing, data storage or logic components together with associated external electronic connectors. For example, the cartridge may include one or more heaters **58** in intimate contact with one or more of the contained columns so as to control temperature during a chromatographic procedure. The heater may be used, for instance, to increase temperature so as to release a sample fraction previously retained or concentrated on a stationary phase within the first column so that the sample fraction may be transferred to the second column. The cartridge may include one or more temperature sensors **60.** Such sensors, if present, may work in conjunction with any on-board heaters as part of a temperature control loop to control the temperature of one or more columns. The control logic may be implemented in software of the electronic controller or computer apparatus **32** or, alternatively, may be implemented in firmware of an on-board circuitry module **52** which may comprise electronic memory or controller logic. In addition or alternatively, the circuitry module **52** may be used to actively record computer-readable data or other information pertaining to the module, including module history information, such information downloadable by or transferrable to external apparatus (such as electronic controller or computer apparatus **32**) through a standard interface **50,** such as a USB port. Other electrical or electronic connectors **56** may be employed to provide power to heaters, to read sensors, etc.

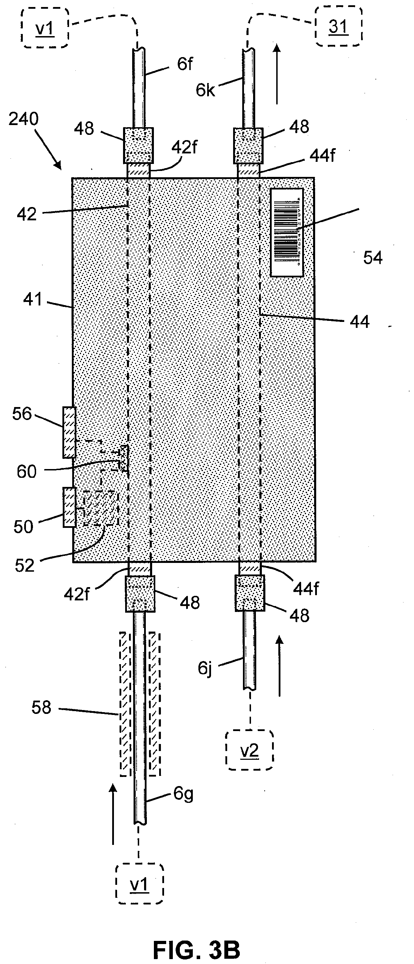

FIGS. 3B-3D illustrate alternative chromatography cartridges in accordance with the present teachings. The cartridge **240** shown in FIG. 3B is similar in most respects to the cartridge shown in FIG. 3A, except that the heater **58** is eliminated from the interior of the housing **41** and, instead, disposed in contact with or in close proximity to an inlet tubing (note the arrow adjacent to tubing line **6g** indicating the direction of fluid flow) such that the fluid is pre-heated prior to entering the column **42.** A similar heater could be similarly disposed with regard to the other column **44** depending upon experimental requirements. Depending upon the rate of fluid flow, the configuration illustrated in FIG. 3A may not allow sufficient time for the fluid within the column to achieve the desired temperature. However, the heater configuration shown in FIG. 3B may be arranged so that the fluid is in contact with the heated length of tubing for a sufficient time so as to achieve the desired temperature within the column. The heater **58** shown in FIG. 3B could comprise any of a several heating devices such as a coiled resistance wire or commercially available heating tape. If desired, the tubing heater may supplement the internal heater illustrated in FIG. 3A. One or more temperature sensors **60** may remain in contact with one or both columns inside the cartridge so as to provide a measurement of the temperature(s) of fluids in the column(s) and possibly so as to provide temperature feedback for controlling the heater.

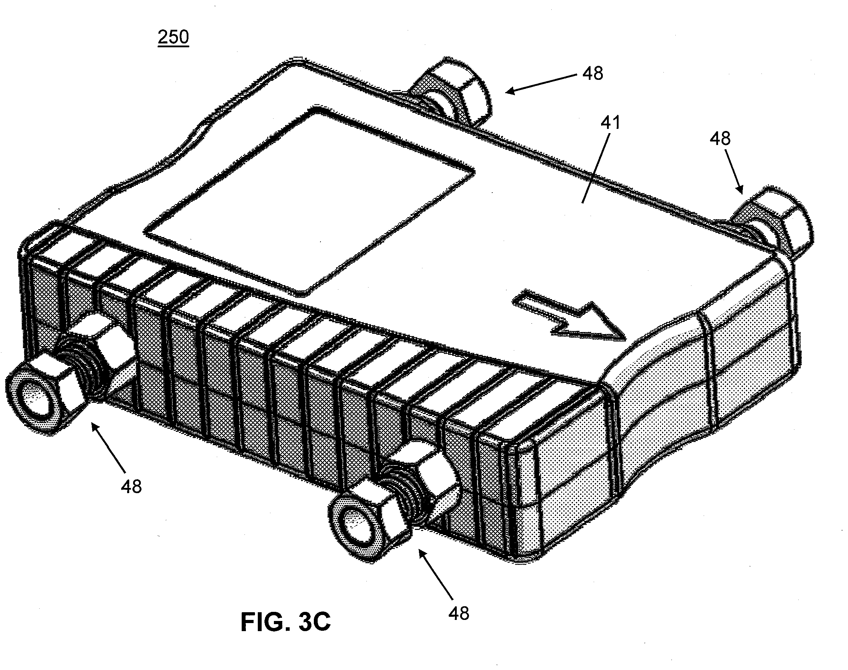

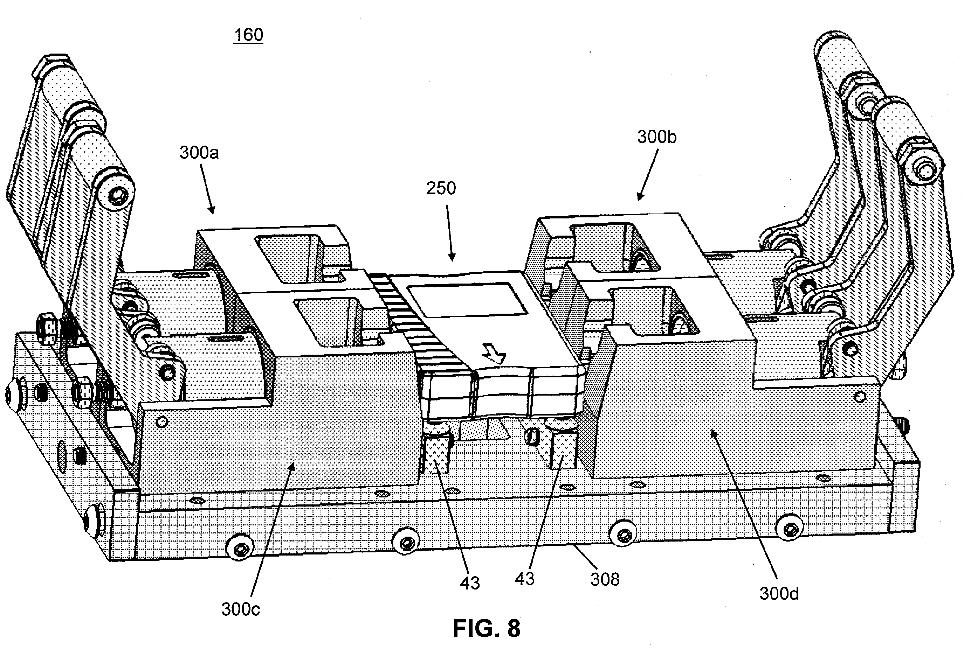

The cartridge **250** depicted in FIGS. 3C-3D comprises a different aspect ratio from the cartridges shown in FIGS. 3A-3B. In many situations, it may be desirable to fabricate the cartridge so as to allow the user to simply, with one motion, insert the cartridge into a holder or cradle such that electrical connections to the cartridge are made at the same time that correct cartridge positioning is achieved. Accordingly, the cartridge **250** comprises a single electrical connector port **53** that replaces and provides the functionality of both the standard interface port **50** and the separate electrical connector **56** shown in FIGS. 3A-3B. The connector port **53** is shown on the underside of the cartridge **250,** in this example, since it may be advantageous for the user to insert a cartridge by pushing it downward into position, as in the system shown in FIG. 8, discussed below. The single downward motion will then both align the cartridge and cause the connector port 53 to make contact with a mating connector in, for instance, a base plate. Other connector port and insertion configurations are also possible.

As an example of a two-stage chromatographic separation, a TurboFlow® column (also sometimes known as a High Turbulence Liquid Chromatography or HTLC column) may be employed, in certain embodiments in accordance with the invention, as a "cleanup" column in a first separation step. The TurboFlow column may be employed to isolate and possibly concentrate a subset of compounds based on their size range or molecular weight range (or some other property) and then a following "analytical column" may be employed to separate the individual compounds of the isolated or concentrated subset. TurboFlow® methods and apparatus are described in detail in U.S. Patents 5,772,874; 5,919,368 and 6,149,816. Briefly stated, the TurboFlow® apparatus and methods include or relate to a chromatography column or body that is formed as a substantially uniformly distributed multiplicity of rigid, solid, porous particles having substantially uniform mean cross-section dimensions or diameters of not less than about 30 µm, typically 50 µm or greater up to, but not limited to, 1000 µm in certain instances. The particles are selected from a range of various sizes and shapes and are held together in a body or column as by pressure, sintering and the like so that interstitial channels having a total interstitial volume of not less than about 45% of the total volume of the column are formed between the particles. The surfaces of the particles, including the inner surfaces of the pores in the particles, are chromatographically active, as by being coated with chromatographic stationary phase layers.

Because of the nature of the particles and packing in a TurboFlow® column, the flow of the fluid mixture through the column can be at a high flow rate and is believed that, under such conditions, turbulent flow of the mixture is induced within at least a major portion of the interstitial volume, and it is postulated that such turbulent flow in fact enhances the rate of mass transfer, thus increasing the dynamic capacity of the column. From the principles of turbulence, diffusion, and chemistry, small sample molecules may be separated from a sample matrix in a TurboFlow® column. Since small molecular weight molecules diffuse faster than large molecular weight molecules, the small sample compounds diffuse into the particle pores. The turbulent flow of the mobile phase quickly flushes the large sample compounds through the column to waste before they have an opportunity to diffuse into the particle pores. Of the sample molecules that enter the pores, those that have an affinity to the chemistry inside the pores bind to the internal surface of the column particles. The small sample molecules that have a lower binding affinity quickly diffuse out of the pores and are flushed to waste. A change in mobile phase, temperature or other parameter may then cause those molecules that were bound by the TurboFlow® column to elute to the analytical column for further separation.

In various other examples, either a Solid Phase Extraction (SPE) column or an affinity chromatography column may be employed as a cleanup column. An SPE column may be used to eliminate or separate out certain non-analyzed or interfering chemical constituents based upon their physical or chemical tendancy to either be held within (or upon) or to pass through a stationary phase material. The interfering constituents may be either suspended or dissolved in the mobile phase. An affinity chromatography column can also to eliminate certain non-analyzed or interfering chemical constituents but, in this latter case, the elimination or separation is based on the relative tendancies of sample constituents to undergo biological interaction with the stationary phase. The biological interaction may, for instance, be a specific interaction between an antigen and an antibody or between an enzyme and the biological material upon which the enzyme specifically interacts.

In one type of experiment, the analyte or analytes of interest may be held within the cleanup column (HTLC, SPE, affinity chromatography or other) while the interfering consituents pass through the cleanup column to waste. A subsequent change of mobile phase solvent (or a change of one or more physical parameters, such as temperature) may then be used to extract the analytes of interest and direct them to the analytical column. In another type of experiment, the analyte or analytes of interest may pass through the cleanup column and then pass to the analytical column while the interfering consituents are held within the cleanup column. A different solvent or a change of one or more physical parameters may be subsequently employed to flush the separated unwanted constituents out of the cleanup column to waste. The analytical column may be a column that separates the various analytes and other constituents based upon the differing retention times within the analytical column. Optimal separation or concentration of any particular analyte may require a particular combination of cleanup and analytical column properties (e.g., chemical or physical makeup of the stationary phase).

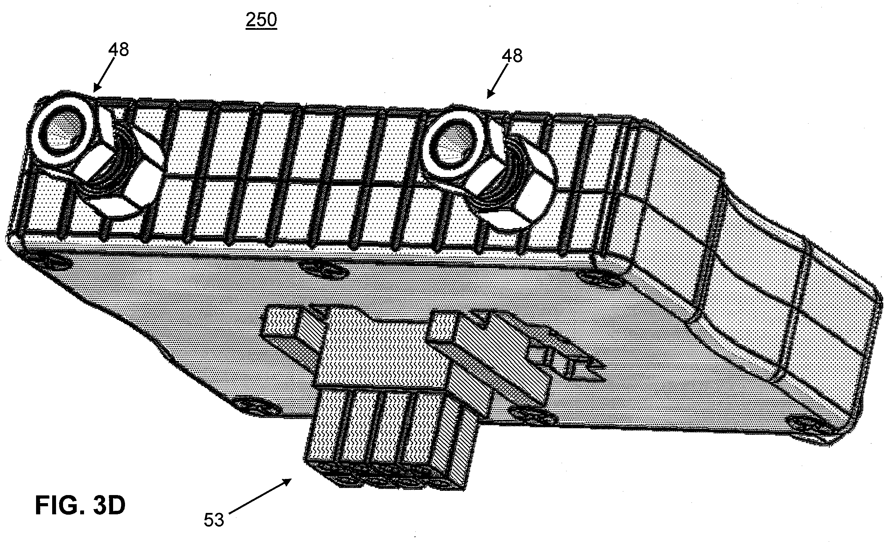

FIG. 4A is an illustration of a first exemplary connector apparatus 100 for coupling a tubing to an end of a chromatographic column in accordance with the present teachings. In some embodiments, the apparatus **100** may be employed as one or more of the connectors **48** (FIGS. 2, 3). Such apparatus may be employed to facilitate quick connection and disconnection of the cartridge **40** from the system **30** shown in FIG. 2. The apparatus shown in FIGS. 4A-4B is described in greater detail in an International (PCT) application for patent titled "Apparatus and Method for Coupling Tubing to Chromatographic Column" (Attorney Docket No. 5806WO1 /PCT). In operation, a tubing 6 passes completely through the connector **100** substantially parallel to an axis of the apparatus through various apertures **111** of the apparatus. The apparatus **100** is operable so as to apply a force to the tubing **6** so that the tubing is pressed into a column end fitting **104** so as to form a fluid coupling with the column **103.** The apparatus **100** is further operable so as to apply a second force to a deformable sealing member **122b** (such as a ferrule) so as to deform the sealing member in a fashion that creates a leak-tight seal between the tubing **6,** end fitting **104** and column **103.** Both such forces are applied substantially parallel to the common axis of the apparatus **100** and the column **103,** thereby preventing application of any twisting motions or forces to the column.

The connector apparatus **100** shown in FIG. 4A comprises a hollow distal (or outer) body member **110,** a hollow intermediate body member **112** and a hollow proximal (or inner) body member **114** where the terms "distal" and "proximal" refer to spatial relationships taken with respect to a chromatograph column **103** having a column end fitting **104.** The distal body member **110** is attached to the intermediate body member **112** by a first threaded coupling **113a** and the intermediate body member **112** is attached to the proximal body member **114** by a second threaded coupling **113b.** The assembled body members are supported, as a group, on a base or housing **108** by a support member **116** which is either affixed to or rigidly clamped onto the proximal body member **114.** The column **103** is supported by a column support member **106** which fits at least partially around the column end fitting **104** as shown in FIG. 4B.

The support member **116** of the apparatus **100** (FIG. 4A) is engaged to the base or housing **108** so as to be moveable, in substantially one direction only, with respect to the housing. Such slidable engagement may be implemented, for instance, by the use of a rail (not shown). Such a rail could be rigidly attached to the support member and designed so as to slide within a matching groove (not shown) in the base or housing. One of ordinary skill in the mechanical arts could readily devise other slidable engagement configurations and couplings.

In contrast to the slidable nature of the coupling between the support member **116** and the base or housing **108,** the column support member **106** is rigidly fixed in place with respect to the base or housing **108.** As shown in FIG. 4B, the column support member **106** comprises a salient or re-entrant portion **107** which is designed to mate with and partially enclose a portion of the column end fitting **104.** Either the column end fitting or the column support may be constructed of a slightly pliable material such that the end fitting **104,** together with the column **103,** "snaps" into a defined and reproducible position within the salient **107** when the column is moved, under force, in the direction of the downward pointing arrow of FIG. 4B. A stopping mechanism of the column end fitting **104,** such as circumferential ridge **105,** prevents movement of the end fitting and column when force is applied to the free end of the column by the apparatus **100** during the operation of coupling a tubing **6** to the column. Although the stopping mechanism is illustrated as a circumferential ridge **105** in FIG. 4B, it could alternatively be implemented as a different form of protrusion, such as a boss, knob or pin. The combination of the slidable coupling between the support member **116** and the base or housing **108** and the fixed coupling between the column support member **106** and the base or housing permits the apparatus **100** (comprising the assembly of three body members **110, 112, 114** and associated components further discussed following) to be moved towards or retracted from the column **103** and its associated column fitting **104** by movement parallel to an axis of the apparatus **100.** Optionally, the slidable coupling may be provided with a locking mechanism to prevent movement when a desired position is achieved.

Returning now to the discussion of FIG. 4A, it may readily be observed that the apparatus **100** further comprises two springs assembled within the apparatus so as to provide separate spring forces parallel to an axis of the apparatus. A first spring **118a** is disposed within a first interior portion of the apparatus defined between the intermediate body member **112** and an end cap **117** of the distal body member **110.** A second spring **118b** is disposed within a second interior portion of the apparatus defined between the intermediate body member **112** and the proximal body member **114.** The first spring **118a** is held against a first bushing or washer **120a** by a first spring retainer **119a.** Likewise, the second spring **118b** is held against a second bushing or washer **120b** by a second spring retainer **119b.** During assembly, the first spring **118a** is pre-loaded with a first pre-determined spring force, by progressive engagement of the first threaded coupling **113a,** so as to supply the first pre-determined spring force between the end cap **117** and the bushing or washer **120a.** Likewise, during assembly, the second spring **118b** is pre-loaded with a second pre-determined spring force, greater than the first pre-determined spring force, by progressive engagement of the second threaded coupling **113b,** so as to supply a second pre-determined spring force between the intermediate body member **114** and the bushing or washer **120b.**

Prior to assembly of the distal body member **110** onto the intermediate body member **114,** a ferrule **122a** is placed into a hollow interior portion of the intermediate body member. The purpose of the ferrule **122a** is to transfer force provided by the first spring **118a** through the bushing or washer **120a** to the tubing **6** such that the tubing is pressed into the column end fitting **104** with sufficient force so that the pressure between the tubing and the end fitting exceeds the fluid pressure - typically 15000 psi - achieved in the column under normal operating conditions. Since the body of the tubing is generally constructed of metal, the ferrule **122a** is preferably constructed of a metal - for instance, stainless steel - having a hardness that is equivalent to or greater than that of the tubing. With such choice of material, force applied to the ferrule **122a** in the direction of the column **103** will tend to cause the ferrule **122a** to wedge itself into the tubing wall so as create a tight metal-to-metal friction seal. In alternative embodiments, the ferrule **122a** may be replaced by a shape on or integral with the tubing **6,** such as a ridge, groove, ring, etc. In operation, the formed shape portion of the tubing may engage with a clamp, ring, washer, bushing etc. in contact with the first spring **118a** in order to transfer spring force to the tubing **6.**

In operation, the apparatus **100** also comprises a deformable sealing member **122b** (which may be a ferrule), which is placed on the tubing **6** just prior to positioning the tubing end into the column end fitting **104.** The purpose of the deformable sealing member or ferrule **122b** is to deform, under application of force provided by the second spring **118b** through the bushing or washer **120b** so as to form a leak-tight seal between the tubing, end fitting and column. Accordingly, the deformable sealimg member **122b** is preferably constructed of an elastic polymer material such as PEEK.

When the apparatus **100** is not in operation providing coupling between a tubing and a column, the pre-loaded spring forces are respectively taken up between the end cap **117** of the distal body member **110** and the intermediate body member **112** and between the intermediate body member and the proximal body member **114.** A user may place the apparatus **100** in operation (with the tubing **6** and the ferrule **122a** already in place within the apparatus and the deformable sealing member or ferrule **122b** already in place on the tubing) by operating a clamping and latching mechanism **124** (comprising both a pushing mechanism and a locking mechanism) which pushes the three body members (and, consequently, also the support member **116,** the tubing **6** and the hardware within the body members) in the direction of the fixed column **103** and its end fitting **104.**

Once the tubing comes into contact with the end fitting, further application of force (by continued operation of the clamping and latching mechanism) causes the tubing to apply an increasing force against the first spring **118a** through the ferrule **122a** and the first bushing or washer **120a.** Once the opposing force provided by the tubing exceeds the pre-loaded spring force on spring **118a,** continued operation of the clamping and latching mechanism will cause the spring to compress, thereby enabling movement of the apparatus such that the deformable sealing member **122b** comes into contact with both the proximal body member **114** and the column end fitting **104.** Further operation of the clamping and latching mechanism causes both compression of the first spring **118a** as well as application of an increasing opposing against the second spring **118b** through the deformable sealing member **122b** and the second bushing or washer **120b.** Still further operation of the clamping and latching mechanism causes both springs **118a, 118b** to compress with consequent increase in spring force applied to the tubing and to the sealing member. The increasing force and pressure on the sealing member **122b** causes this sealing member to deform within the column end fitting **104** and around the tubing so as to create a leak-tight pressure seal.

A recess **115** in the end of the proximal body member **114** may be provided so as to provide a gap for accommodation of the deformable sealing member **122b** and to guide the relative movement between the connector apparatus **100** and the column end fitting **104** during the clamping and latching procedure. The pre-compression of the springs prior to actual operation of the apparatus ensures that minimal actual movement of parts is required to achieve the required or appropriate final forces on the tubing and on the deformable sealing member.

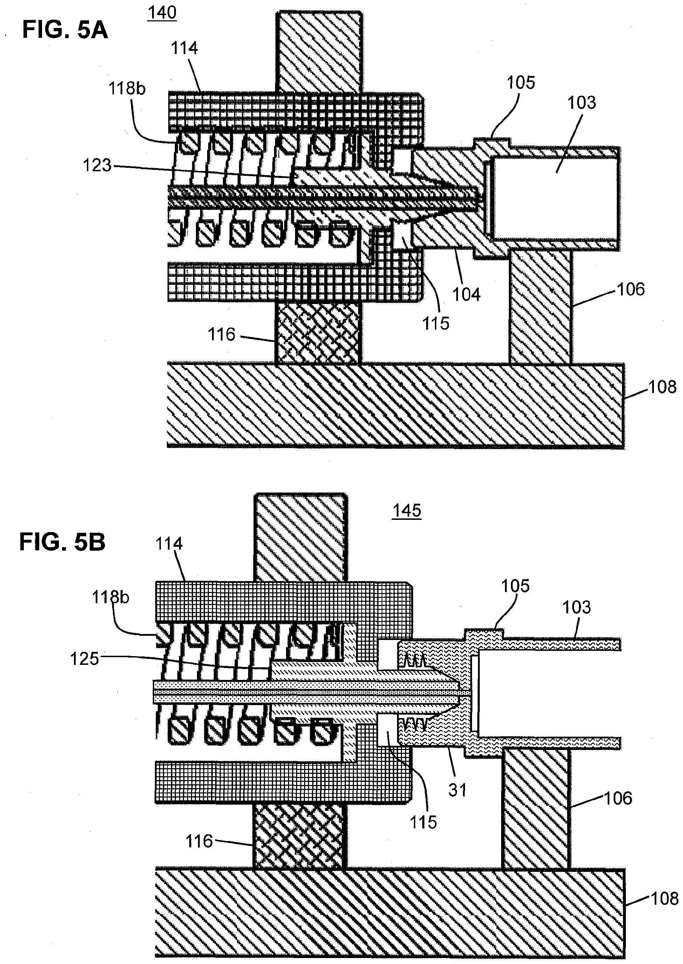

FIGS. 5A-5B are illustrations of end portions of two alternative apparatuses for coupling a tubing to an end of a chromatographic column in accordance with the present teachings and which, in some embodiments, may be employed as one or more of the connectors **48** (FIGS. 2, 3). The apparatuses **140, 145** shown in FIGS. 5A, 5B are similar, in most respects, to the apparatus **100** illustrated in FIG. 4A. However the apparatuses **140, 145** differ from the apparatus **100** in regards to the manner in which the tubing **6** is sealed to an end fitting **104, 31** and to the column **103.** Whereas, in the apparatus **100,** the deformable sealing member **122b** may simply comprise a second ferrule, in the apparatus **140** shown in FIG. 5A, a single integral, single-bodied sealing member **123** replaces both the second bushing or washer **120b** and the sealing member **122b.** The sealing member **123** comprises a deformable material so as to create a leak-tight seal between the tubing **6,** the end fitting **104** and the column **103** under force from the second spring **118b.** In the apparatus **140** shown in FIG. 5A, another integral, single-bodied sealing member **125** is employed for such sealing purposes.

The sealing member **125** of the alternative apparatus **145** (FIG. 5B) is a modified version of the sealing member shown in FIG. 5A in which a portion extending outward from the proximal body member **114** is elongated, such that the tubing **6** can be sealingly coupled to a conventional column end fitting **31** using the novel coupling apparatus **145.** Many conventional end fittings, such as the conventional end-fitting **31,** have a bore with an internal screw thread. This internal screw thread is designed to mate with external threads of a threaded nut or screw that may be rotated so as to provide a compression force. Although such screw threads are not employed in the illustrated novel embodiments disclosed herein, it is nonetheless desirable to be able to employ the invention in conjunction with existing chromatographic columns having conventional fittings. Accordingly, the sealing member **125** has an elongated portion that has a diameter smaller than the internal diameter of the threaded portion of the end fitting **31.** In this way, the sealing member **125** is adapted so as to extend into the conventional column end fitting without contacting the threads, thereby bypassing the threaded portion. Inward of the threads, the deformable sealing member **125** engages, in operation, with a tapered portion of the bore of the conventional end-fitting, thereby forming a leak-tight seal in a manner similar to the way in which the deformable sealing member or second ferrule **122b** creates a seal against the un-threaded end fitting **104** (FIG. 4A). Upon disconnection of a tubing from a chromatographic column using either apparatus **140** or apparatus **145,** the sealing member (either sealing member **123** or sealing member **125**) may remain either attached to or within the proximal body member **114,** thereby eliminating the requirement for a user to supply or insert a ferrule at the next use of the respective apparatus.

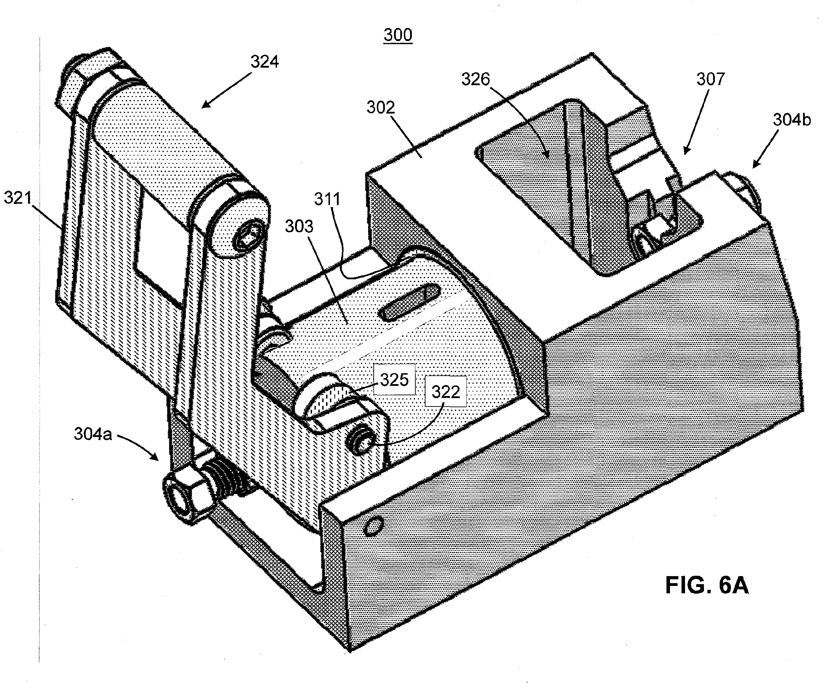

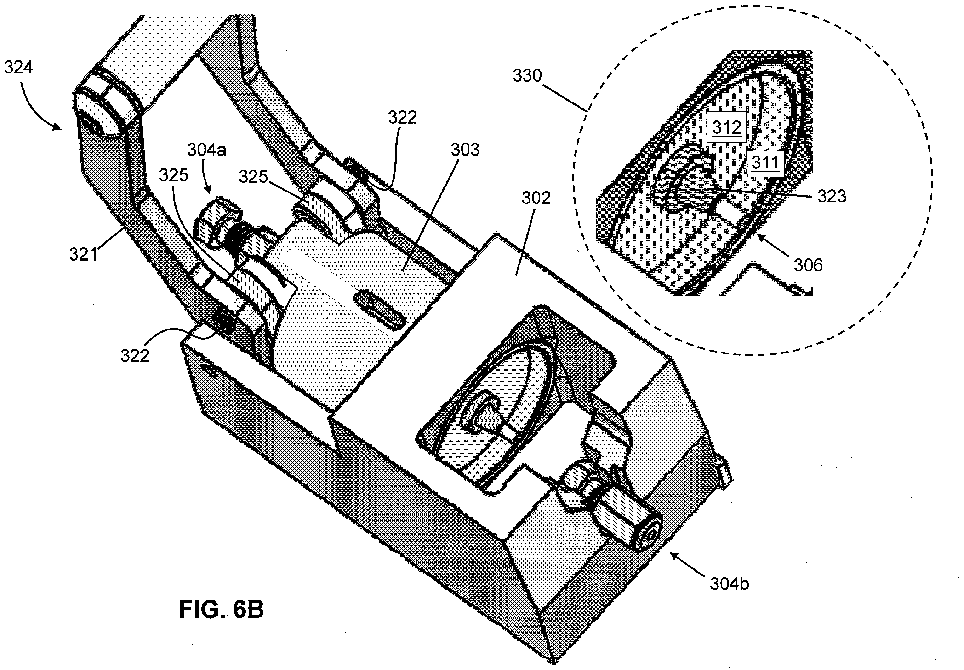

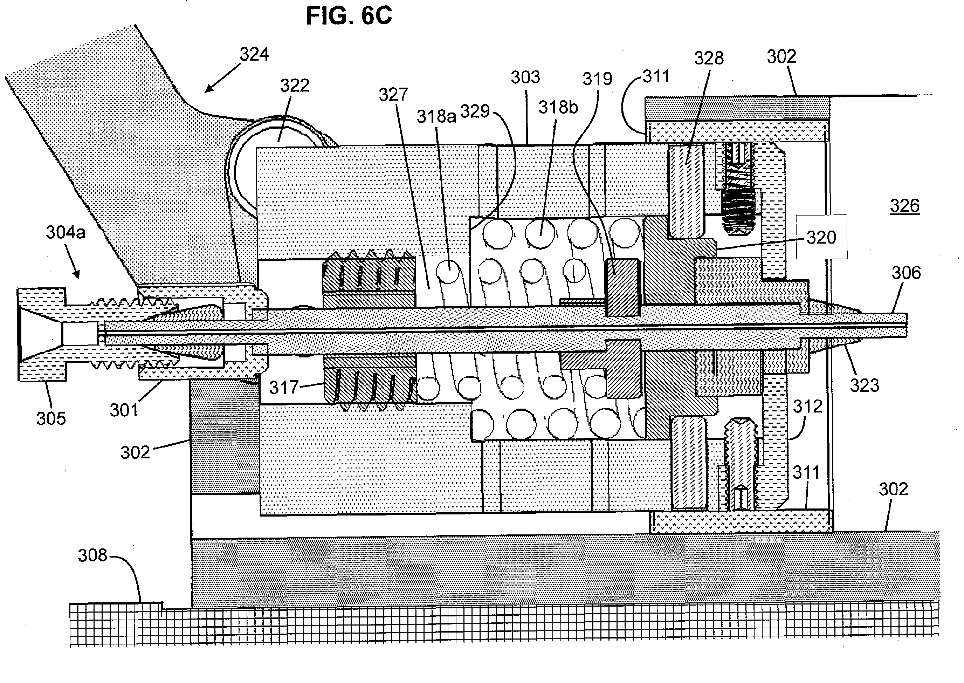

FIGS. 6A-6C depict another apparatus for coupling a tubing to an end of a chromatographic column in accordance with various aspects of the present teachings. In some embodiments, the apparatus **300** illustrated in FIG. 6 may be employed as one of more of the connectors **48** shown in FIGS. 2-3. Referring in detail now to the connector apparatus **300,** FIGS. 6A and 6C are first and second perspective external views of the fully assembled apparatus **300.** Considered generally, the apparatus **300** comprises a housing **302** that is a first body member of the apparatus and a piston **303** that is a second body member of the apparatus. The housing **302** has an open bore or cavity **326.** The piston **303** is capable of being slidably inserted at least partially into the bore or cavity **326** of the housing and is also capable of being at least partially retracted from the bore or cavity. Preferably, a portion of bore or cavity **326** comprises a shape that mates with the portion of the piston which is capable of being slidably inserted into the bore or cavity. If this portion of the piston is cylindrical, then the piston and bore may be said to comprise a piston-cylinder relationship.

A bushing or other bearing **311** may be provided within the portion of the bore or cavity **326** that receives the portion of the piston **303** so as to provide a smooth sliding surface for insertion and retraction of the piston. The movement of the piston into or partial retraction of the piston from the housing may be controlled manually by a user by means of a pushing and latching (or locking) mechanism **324.** As shown the pushing and latching mechanism may comprise a hand operated lever **321** and a coupling bar **325** such that the coupling bar **325** is mechanically engaged to the lever **321** by means of a first pivot pin **322** about which an end of the coupling bar is free to rotate. A second pivot pin (not shown) similarly provides mechanical engagement between the opposite end of the coupling bar **325** and the piston **303** so that rotational motion of the lever **321** is converted into translational motion of the piston.

The piston **303** has a chamber **327** therein through which a length of tubing **306** passes. The inset drawing **330** of FIG. 3B shows a portion of the apparatus **300** in magnified view so that an end portion of the tubing **306** may be seen protruding beyond an end plate **312** of the piston **303.** A sealing member **323,** which is a part of the apparatus and which may be a deformable ferrule, encloses a portion of the tubing **306** such that the end portion of the tubing protudes partially beyond the sealing member **323.** The sealing member **323** has a conical outer surface which is designed to mate with a conical inner surface of a conventional end fitting **304b** (which is not necessarily a component of the apparatus **300** but which is shown for clarity) so as to provide a leak-tight seal within the end fitting **304b**. In operation, the end-fitting **304b** will generally be mounted on an end of a chromatograph column (not shown) which will be either an inlet end or an outlet end of the column. Accordingly, with the tubing **306** and sealing member **323** inserted into the end fitting **304b** by means of the connector apparatus **300,** the tubing **306** will either deliver fluid into or receive fluid from the chromatograph column.

In the views shown in FIGS. 6A, 6B, the connector apparatus is shown in an open position, such that the end of the tubing **306** is retracted from the end fitting **304b**. In this open configuration, the chromatograph column may be removed or replaced. The same or a different chromatograph column may then be positioned in the correct placement so as to receive the end of the tubing **306** by positioning its end fitting into a slot, recess or groove **307** (FIG. 6A) of the housing **302.** Thus, a portion of the housing comprising the slot, recess or groove **307** provides the same functionality as the column support member **106** discussed previously herein in conjunction with other embodiments. Subsequently, the pushing and latching mechanism **324** is operated so as to cause the piston **303** to move further into the bore or cavity **326** with the tubing **306** being carried along with such motion until the tubing end engages with the end fitting **304b**. Further operation of the lever in the same direction causes a leak-tight seal to be formed between the tubing and the end fitting in a manner described below.

FIG. 6C is a cross-sectional view through the center of the piston **303** of the apparatus **300** and also through the center of the tubing **306** that illustrates internal components within the chamber **327** of the piston. FIG. 6C also illustrates that the housing **302** may be affixed to a base plate or external housing **308,** so as to provide positional stabilization of the apparatus **300** as previously discussed in regard to other embodiments. The components within the chamber **327** enable the apparatus **300** to provide a leak-tight seal between the tubing **306** and the chromatograph column end fitting **304b,** even under high pressures encountered in HPLC applications, without the need for applying any twisting motion or torque to either the tubing or the column.

As may be observed from FIG. 6C, the piston chamber **327** has disposed within it a first helically coiled spring **318a** and a second helically coiled spring **318b** that has an internal diameter that is greater than the external diameter of the first spring. The springs are disposed such that they are at least partially overlapping - that is, such that at least a portion of the first spring **318a** resides within a volume or space defined by the internal diameter of the second spring **318b.** The tubing **306** passes substantially parallel to and along the common axis of the two springs **318a, 318b.** In operation, the first helically coiled spring **318a** (FIG. 6C) transmits a first spring force to the tubing **306** by means of a collar, sleeve or flange **319** that abuts an end of the first spring. The collar, sleeve or flange **319** is either affixed to or tightly engaged with the tubing **306** so as to apply a force to the tubing in a direction substantially parallel to its axis and towards the end fitting **304b.** A screw **317** which is threaded into a portion of the piston chamber **327** abuts the other end of the first spring and may be pre-adjusted so as to provide a desired pre-loaded compressional force to the spring. The second helically coiled spring **318b** transmits a second spring force to the sealing member **323** by means of an intermediate push plate **320,** such as a bushing or a flange. The second spring **318b** is restrained within the piston chamber **327** by push plate **320** at the end nearest to the end fitting **304b** and by an internal wall **329** of the chamber at the other end. The push plate **320** is restrained within the chamber **327,** against the spring forces, by a mechanical stop or stops **328** which are engaged to a piston wall or walls and which may comprise, for example, a set of pins passing through holes in the piston wall, a locking ring or flange secured by an internal groove in an interior piston wall or any other boss or knob engaged to or affixed to the piston. The mechanical stop or stops prevent the springs from pushing themselves and/or other components out of the chamber **327** when the pushing and latching mechanism is in the open position such that the tubing **306** is retracted from the end fitting **304b**.

As previously illustrated in and discussed with reference to FIG. 2, the cartridge **40** of the system **30** will generally employ at least four connector apparatuses **48** for fluidic connection to fluid tubing lines. The connector apparatuses may comprise conventional tubing connectors or end fittings. Alternatively, the connector apparatuses may comprise apparatuses, such as those illustrated in FIGS. 4-6 herein, which eliminate the need to use an installation tool or to apply a twisting motion or torque to either the tubing, the columns or the cartridge in general. Since the cartridge **40** is not necessarily limited to containing just two chromatography columns, the will, in general, be a requirement for twice as many connectors as columns in the cartridge. It is thus desirable to be able to connect or disconnect multiple tubing lines to or from the cartridge **40** simultaneously.

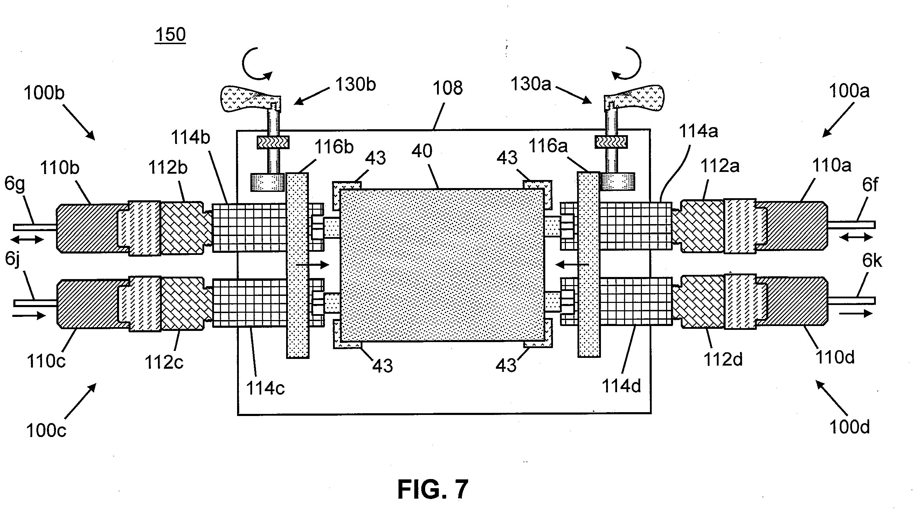

In accordance with the above considerations, FIG. 7 illustrates a system **150** for coupling multiple input tubing and output tubing lines to a cartridge **40** in accordance with the present teachings. The system **150** of FIG. 7 comprises a single base or housing **108** that supports four connector apparatuses **100a-100d** (see FIG. 4) by means of a first slidable support member **116a** at a first end of the cartridge and a second slidable support member 116b disposed at the opposite end. The slidable support member **116a** supports both apparatus **100a** and **100d** and may be considered, for purposes of this discussion, as the fusion into a single component of the individual separate support members **106** (cf. FIG. 4A) of these two connector apparatuses. Likewise, the slidable support member **116b** supports both apparatus **100b** and **100c.** The cartridge **40** is supported in a fixed position relative to the base or housing **108** by column support members **43.**

The connector apparatus **100a,** which comprises distal body member **110a,** intermediate body member **112a** and proximal body member **114a,** serves to couple tubing **6f** to an end of the first column **42** within the cartridge **40.** The connector apparatus **100b,** which comprises distal body member **110b,** intermediate body member **112b** and proximal body member **114b,** serves to couple tubing **6g** to the other end of the first column. The connector apparatus **100c,** which comprises distal body member **110c,** intermediate body member **112c** and proximal body member **114c,** serves to couple input tubing **6j** to the input end of the second column **44** within the cartridge **40.** The connector apparatus **100d,** which comprises distal body member **110d,** intermediate body member **112d** and proximal body member **114d,** serves to couple output tubing **6k** to the output end of the second column.

A first clamping mechanism **130a** and a second clamping mechanism **130b** are each operable by a user so as to provide the compressional clamping motions described previously. In operation of the device **150,** the user will place the cartridge **40** into the device and operate both clamping mechanisms **130a, 130b,** such as by rotating a lever associated with each clamping mechanism. As previously described, the positioning of the sections of tubing, ferrules or sealing members and column end fittings, as well as the application of the appropriate forces is assured by the device. As the holding force on the tube is separate from the sealing force on the deformable sealing member or ferrule, each can be set only as necessary, enabling reuse of the tube and ferrule many times more as compared to typical combination of tube and ferrule.

The system **150** illustrated in FIG. 7 may employ multiple instances of the connector apparatus **100** (FIG. 4) or instances of the connector apparatuses **140** or **145** (FIG. 5). FIG. 8 illustrates an alternative system **160** which employs multiple instances of the connector apparatus **300** shown in FIG. 6 (or similar apparatuses). Because each coupling apparatus **300** provides a built-in support structure for a column end fitting as well as a slidable piston, the slidable support members (**116a, 116b**) are rendered unnecessary. All that is required is to attach pairs of the apparatus **300** facing one another on a base plate or external housing **308** (FIG. 8) at an appropriate distance from one another such that the end fittings of the columns of a chromatography cartridge fit easily into the slots recesses or grooves of the two connector apparatuses. For example, FIG. 8 illustrates a cartridge **250** mounted on cartridge support members **43** which are mounted on a base plate or housing **308.** Four instances of the connector apparatus shown in FIG. 6 are also mounted on the base plate or housing **308.** Connector apparatuses **300a** and **300b** connect inlet and outlet ends of a first column of the cartridge **250** to associated fluid tubing lines and connector apparatuses **300c** and **300d** provide similar functions with respect to the other column of the cartridge. In this example, electronic or other electrical connections to the cartridge may be facilitated by a connector (not shown) mounted to the base plate or housing **308** beneath the cartridge.

A multiple column cartridge for chromatography systems has been disclosed. Advantageously, a multiple column cartridge in accordance with the present teachings may be employed in an automated sample preparation and analysis system, such as is disclosed in international patent application publication WO2012058632A1. In various embodiments, the automated sample preparation and analysis system includes a sample preparation system for preparing various samples and a sample analysis system, which may include a liquid chromatography mass spectrometer ("LCMS") for analyzing the prepared samples according to selected analyte assays. The sample preparation system and the sample analysis system are interconnected in an automated manner. A multiple column cartridge in accordance with the present teachings may assist in ease of configuration and use of such an automated system.

## Claims

1. A cartridge (40) for liquid chromatography separations comprising:
a housing (41);
at least a first (42) and a second (44) chromatography column at least partially passing through the housing (41), each chromatography column (103) comprising a first and a second end fitting (104) operable to connect the respective chromatography column (103) to external tubing (6);
**characterized in that** the first (42) chromatography column comprises a cleanup column and the second (44) chromatography column comprises an analytical column, wherein, in operation, the cleanup column (42) isolates a subset of compounds based on their size range or molecular weight range and the analytical column (44) separates the individual compounds of the isolated subset of compounds and wherein the cleanup and analytical columns are matched with one another so as to provide optimum chromatographic separation for a particular type of analysis, a particular analysis protocol or a particular sample type .

2. A cartridge (40) as recited in claim 1, further comprising a machine-readable identification unit identifying the cartridge.

3. A cartridge (40) as recited in claim 2 wherein the machine-readable identification unit comprises a label attached to an exterior of the housing and having a barcode (54) printed thereon.

4. A cartridge (40) as recited in claim 2, wherein the machine-readable identification unit comprises an RFID tag attached to or within the housing (41).

5. A cartridge (40) as recited in claim 2, wherein the machine-readable identification unit comprises a non-volatile computer-readable memory device attached to or within the housing (41).

6. A cartridge (40) as recited in any of claims 1-5, further comprising:
a non-volatile computer-readable memory device (52) attached to or within the housing (41); and
a data communications port (50) attached to the housing (41) operable for connection to an external electronic data communications line,
wherein the non-volatile computer-readable memory device (52) comprises stored information relating to the cartridge.

7. A cartridge (40) as recited in claim 6, wherein the stored information comprises information relating to the identities of the at least first (42) and second (44) chromatography columns.

8. A cartridge (40) as recited in claim 6, wherein the stored information comprises information relating to the usage time of the cartridge.

9. A cartridge (40) as recited in claim 6, wherein the stored information comprises information relating to the number of chromatographic separations performed using the cartridge.

10. A cartridge (40) as recited in claim 6, wherein the stored information comprises historical data relating to temperatures, fluid pressures, or fluid flow rates within the cartridge.

11. A cartridge (40) as recited in claim 6, wherein the data communications port (50) comprises a universal serial bus (USB) port.

12. A cartridge (40) as recited in claim 1,
wherein the first chromatography column (42) includes a packing material formed as a substantially uniformly distributed multiplicity of rigid, solid, porous particles having substantially uniform mean cross-section dimensions or diameters of not less than about 30 µm and a system of interstitial channels between said particles having a total interstitial volume of not less than about 45% of the total volume of the column, wherein the particles and interstitial channels are configured such that, in operation, flow within at least a major portion of the interstitial volume is turbulent; and
wherein the second chromatography column (44) includes a packing material different from the packing material of the first chromatography column (42).

13. A cartridge (40) as recited in any of claims 1-5 or claim 12, further comprising:
a temperature sensor (60) operable to monitor the temperature of the first chromatography column (42) or the contents thereof; and
a data communications port (50) attached to the housing (41) and electronically coupled to the temperature sensor (60) and operable for transferring a signal from the temperature sensor (60) to an external electronic data communications line.

14. A cartridge (40) as recited in claim 13, further comprising:
a heater (58) in thermal contact with at least one of the first (42) and second (44) chromatography columns, the heater (58) operable to heat the at least one chromatography column or the contents thereof; and
an electrical connector (56) attached to the housing (41) for supplying electrical power to the heater (58).

15. A cartridge (40) as recited in claim 13, further comprising:
a heater (58) in thermal contact with an inlet tubing (69) providing fluid to the at least one chromatography column, the heater (58) operable to heat the inlet tubing (69) or the contents thereof; and
an electrical connector attached to the heater (58) for supplying electrical power thereto.

16. A cartridge (40) as recited in any of claims 12-15, further comprising:
a non-volatile computer-readable memory device (52) comprising stored information relating to the cartridge.

## Patentansprüche

1. Kartusche (40) für Flüssigchromatographietrennungen, die Folgendes umfasst:
ein Gehäuse (41);
wenigstens eine erste (42) und eine zweite (44) Chromatographiesäule, die wenigstens teilweise durch das Gehäuse (41) verlaufen, wobei jede Chromatographiesäule (103) ein erstes und ein zweites Endstück (104) umfasst, das betriebsfähig ist, um die jeweiligen Chromatographiesäulen (103) mit einem äußeren Schlauch (6) zu verbinden;
**dadurch gekennzeichnet, dass** die erste (42) Chromatographiesäule eine Reinigungssäule umfasst und die zweite (44) Chromatographiesäule eine Analysesäule umfasst, wobei die Reinigungssäule (42) im Betrieb eine Untergruppe von Verbindungen basierend auf ihrem Größenbereich oder ihrem Molekularmassenbereich isoliert und die Analysesäule (44) die einzelnen Verbindungen der isolierten Untergruppe von Verbindungen trennt, und wobei die Reinigungs- und die Analysesäule aufeinander abgestimmt sind, um eine optimale chromatographische Trennung für eine bestimmte Analyseart, ein bestimmtes Analyseprotokoll oder eine bestimmte Probenart bereitzustellen.

2. Kartusche (40) nach Anspruch 1, die ferner eine maschinenlesbare Identifikationseinheit umfasst, die die Kartusche identifiziert.

3. Kartusche (40) nach Anspruch 2, wobei die maschinenlesbare Identifikationseinheit ein Etikett umfasst, das an einer Außenseite des Gehäuses angebracht ist und einen Barcode (54) aufweist, der darauf aufgedruckt ist.

4. Kartusche (40) nach Anspruch 2, wobei die maschinenlesbare Identifikationseinheit ein RFID-Tag umfasst, das an oder innerhalb des Gehäuses (41) angebracht ist.

5. Kartusche (40) nach Anspruch 2, wobei die maschinenlesbare Identifikationseinheit eine nichtflüchtige computerlesbare Speichervorrichtung umfasst, die an oder innerhalb des Gehäuses (41) angebracht ist.

6. Kartusche (40) nach einem der Ansprüche 1-5, die ferner Folgendes umfasst:
eine nichtflüchtige computerlesbare Speichervorrichtung (52), die an oder innerhalb des Gehäuses (41) angebracht ist; und
einen Datenkommunikationsanschluss (50), der an dem Gehäuse (41) angebracht ist und der für eine Verbindung mit einer äußeren elektronischen Datenkommunikationsleitung betriebsfähig ist, wobei die nichtflüchtige computerlesbare Speichervorrichtung (52) gespeicherte Informationen umfasst, die sich auf die Kartusche beziehen.

7. Kartusche (40) nach Anspruch 6, wobei die gespeicherten Informationen Informationen umfassen, die sich auf die Identität der wenigstens ersten (42) und zweiten (44) Chromatographiesäule beziehen.

8. Kartusche (40) nach Anspruch 6, wobei die gespeicherten Informationen Informationen umfassen, die sich auf die Verwendungszeit der Kartusche beziehen.

9. Kartusche (40) nach Anspruch 6, wobei die gespeicherten Informationen Informationen umfassen, die sich auf die Anzahl der unter Verwendung der Kartusche durchgeführten chromatographischen Trennungen beziehen.

10. Kartusche (40) nach Anspruch 6, wobei die gespeicherten Informationen historische Daten umfassen, die sich auf Temperaturen, Fluiddrücke oder Fluidströmungsraten innerhalb der Kartusche beziehen.

11. Kartusche (40) nach Anspruch 6, wobei der Datenkommunikationsanschluss (50) einen universellen seriellen Bus(*universal serial bus* - USB)-Anschluss umfasst.

12. Kartusche (40) nach Anspruch 1,
wobei die erste Chromatographiesäule (42) einen Füllkörper, der als eine im Wesentlichen gleichmäßig verteilte Vielzahl von starren, festen und porösen Teilchen ausgebildet ist, die im Wesentlichen gleichmäßige mittlere Querschnittsabmessungen oder Durchmesser von wenigstens etwa 30 µm aufweisen, und ein System von Zwischenkornkanälen zwischen den Teilchen beinhaltet, die ein Gesamtzwischenkornvolumen von wenigstens etwa 45 % des Gesamtvolumens der Säule aufweisen, wobei die Teilchen und Zwischenkornkanäle derart konfiguriert sind, dass die Strömung im Betrieb innerhalb von wenigstens einem Großteil des Zwischenkornvolumens turbulent ist; und
wobei die zweite Chromatographiesäule (44) einen Füllkörper beinhaltet, der sich von dem Füllkörper der ersten Chromatographiesäule (42) unterscheidet.

13. Kartusche (40) nach einem der Ansprüche 1-5 oder 12, die ferner Folgendes umfasst:
einen Temperatursensor (60), der betriebsfähig ist, um die Temperatur der ersten Chromatographiesäule (42) oder deren Inhalt zu überwachen; und
einen Datenkommunikationsanschluss (50), der an dem Gehäuse (41) angebracht und mit dem Temperatursensor (60) elektronisch gekoppelt und betriebsfähig ist, um ein Signal von dem Temperatursensor (60) zu einer äußeren elektronischen Datenkommunikationsleitung zu übertragen.

14. Kartusche (40) nach Anspruch 13, die ferner Folgendes umfasst:
eine Heizvorrichtung (58) in thermischem Kontakt mit der ersten (42) und/oder der zweiten (44) Chromatographiesäule, wobei die Heizvorrichtung (58) betriebsfähig ist, um die wenigstens eine Chromatographiesäule oder deren Inhalt zu erhitzen; und
einen elektrischen Verbinder (56), der an dem Gehäuse (41) angebracht ist, um der Heizvorrichtung (58) elektrische Energie zuzuführen.

15. Kartusche (40) nach Anspruch 13, die ferner Folgendes umfasst:
eine Heizvorrichtung (58) in thermischem Kontakt mit einem Einlassschlauch (69), der der wenigstens einen Chromatographiesäule Fluid bereitstellt, wobei die Heizvorrichtung (58) betriebsfähig ist, um den Einlassschlauch (69) oder deren Inhalt zu erhitzen; und
einen elektrischen Verbinder, der an der Heizvorrichtung (58) zum Zuführen von elektrischer Energie zu dieser angebracht ist.

16. Kartusche (40) nach einem der Ansprüche 12-15, die ferner Folgendes umfasst:
eine nichtflüchtige computerlesbare Speichervorrichtung (52), die gespeicherte Informationen umfasst, die sich auf die Kartusche beziehen.

## Revendications

1. Cartouche (40) pour séparations par chromatographie liquide comprenant :
un boîtier (41) ;
au moins une première (42) et une seconde (44) colonnes de chromatographie passant au moins partiellement à travers le boîtier (41), chaque colonne de chromatographie (103) comprenant un premier et un second raccord d'extrémité (104) pouvant être utilisé pour raccorder la colonne de chromatographie (103) respective à une tubulure externe (6) ;
**caractérisée en ce que** la première (42) colonne de chromatographie comprend une colonne de nettoyage et la seconde (44) colonne de chromatographie comprend une colonne analytique, en cours d'utilisation, la colonne de nettoyage (42) isolant un sous-ensemble de composés en fonction de leur plage de taille ou plage de poids moléculaire et la colonne analytique (44) séparant les composés individuels du sous-ensemble isolé de composés et les colonnes de nettoyage et d'analyse étant appariées entre elles de manière à fournir une séparation chromatographique optimale pour un type particulier d'analyse, un protocole d'analyse particulier ou un type d'échantillon particulier.

2. Cartouche (40) selon la revendication 1, comprenant en outre une unité d'identification lisible par machine identifiant la cartouche.

3. Cartouche (40) selon la revendication 2, dans laquelle l'unité d'identification lisible par machine comprend une étiquette fixée à l'extérieur du boîtier et sur laquelle est imprimé un code-barres (54).

4. Cartouche (40) selon la revendication 2, dans laquelle l'unité d'identification lisible par machine comprend une étiquette RFID fixée sur ou à l'intérieur du boîtier (41).

5. Cartouche (40) selon la revendication 2, dans laquelle l'unité d'identification lisible par machine comprend un dispositif de mémoire non volatile lisible par ordinateur fixé sur ou à l'intérieur du boîtier (41).

6. Cartouche (40) selon l'une quelconque des revendications 1 à 5, comprenant en outre :
un dispositif de mémoire non volatile lisible par ordinateur (52) fixé sur ou à l'intérieur du boîtier (41) ; et
un port de communication de données (50) fixé au boîtier (41) pouvant être utilisé pour effectuer une connexion à une ligne de communication de données électroniques externe, le dispositif de mémoire non volatile lisible par ordinateur (52) comprenant des informations stockées se rapportant à la cartouche.

7. Cartouche (40) selon la revendication 6, dans laquelle les informations stockées comprennent des informations se rapportant aux identités desdites première (42) et seconde (44) colonnes de chromatographie.

8. Cartouche (40) selon la revendication 6, dans laquelle les informations stockées comprennent des informations se rapportant à la durée d'utilisation de la cartouche.

9. Cartouche (40) selon la revendication 6, dans laquelle les informations stockées comprennent des informations se rapportant au nombre de séparations chromatographiques effectuées à l'aide de la cartouche.

10. Cartouche (40) selon la revendication 6, dans laquelle les informations stockées comprennent des données historiques se rapportant aux températures, aux pressions de fluide ou aux débits de fluide à l'intérieur de la cartouche.

11. Cartouche (40) selon la revendication 6, dans laquelle le port de communication de données (50) comprend un port de bus série universel (USB).

12. Cartouche (40) selon la revendication 1,
la première colonne de chromatographie (42) comportant un remplissage formé comme une multiplicité sensiblement uniformément répartie de particules rigides, solides et poreuses ayant des dimensions ou des diamètres de section transversale moyenne sensiblement uniformes d'au moins environ 30 µm et un système de canaux interstitiels entre lesdites particules ayant un volume interstitiel total d'au moins environ 45 % du volume total de la colonne, les particules et les canaux interstitiels étant conçus de telle sorte que, en cours d'utilisation, l'écoulement dans au moins une partie majeure du volume interstitiel est turbulente ; et
la seconde (44) colonne de chromatographie comportant un remplissage différent du remplissage de la première (42) colonne de chromatographie.

13. Cartouche (40) selon l'une quelconque des revendications 1 à 5 ou la revendication 12, comprenant en outre :
un capteur de température (60) permettant de surveiller la température de la première (42) colonne de chromatographie ou de son contenu ; et
un port de communication de données (50) fixé au boîtier (41) et couplé électroniquement au capteur de température (60) et pouvant être utilisé pour transférer un signal depuis le capteur de température (60) vers une ligne de communication de données électroniques externe.

14. Cartouche (40) selon la revendication 13, comprenant en outre :
un élément chauffant (58) en contact thermique avec la première (42) et/ou la seconde (44) colonne de chromatographie, l'élément chauffant (58) permettant de chauffer ladite colonne de chromatographie ou son contenu ; et
un connecteur électrique (56) fixé au boîtier (41) pour fournir de l'énergie électrique à l'élément chauffant (58).

15. Cartouche (40) selon la revendication 13, comprenant en outre :
un élément chauffant (58) en contact thermique avec une tubulure d'entrée (69) fournissant du fluide à ladite colonne de chromatographie, l'élément chauffant (58) pouvant être utilisé pour chauffer la tubulure d'entrée (69) ou son contenu ; et
un connecteur électrique fixé à l'élément chauffant (58) pour lui fournir de l'énergie électrique.

16. Cartouche (40) selon l'une quelconque des revendications 12 à 15, comprenant en outre :
un dispositif (52) de mémoire non volatile lisible par ordinateur comprenant des informations stockées se rapportant à la cartouche.
